# EUROPEAN PATENT SPECIFICATION

(11) **EP 2 594 600 B1**
(45) Date of publication and mention of the grant of the patent: **16.05.2018**
(21) Application number: 11806462.5
(22) Date of filing: 07.07.2011
(51) Int. Cl.: C08J 5/00, C08L 33/00, B29C 39/10, C08F 4/40, C08F 299/00

(54) **COMPOSITE MOLDED BODY AND METHOD FOR PRODUCING SAME**
VERBUNDSTOFFFORMKÖRPER UND HERSTELLUNGSVERFAHREN DAFÜR
CORPS MOULÉ COMPOSITE ET PROCÉDÉ POUR SA PRODUCTION

(30) Priority: 16.07.2010 JP 2010162124
(43) Date of publication of application: 22.05.2013
(73) Proprietor: Kaneka Corporation, Osaka (JP)
(72) Inventor: KOHNO, Yoshiyuki, Settsu-shi Osaka 566-0072 (JP)
(74) Representative: Vossius & Partner Patentanwälte Rechtsanwälte mbB
(86) International application number: PCT/JP2011/003909
(87) International publication number: WO 2012/008127

(56) References cited:
- JP-A- 5 024 129
- JP-A- 7 000 205
- JP-A- 2002 275 392
- JP-B2- 4 176 900
- US-A1- 2004 237 462
- US-A1- 2009 292 075

## Description

### TECHNICAL FIELD

The present invention relates to a composite formed article and to a method for producing this composite formed article. More particularly, the present invention relates to a composite formed article comprising a formed article (A) and a rubber- or gel-like cured product (B), wherein the rubber- or gel-like cured product (B) is obtained by curing an active energy ray-curable composition (C). The present invention also relates to a forming method for producing a composite formed article, comprising injecting the curable composition (C) into a cavity in the formed article (A) and then curing the curable composition (C) by exposure to active energy rays to give the rubber- or gel-like cured product (B).

### BACKGROUND ART

Shock-absorbing materials, vibration-damping materials, vibration-isolating materials, soundproof materials, sound-absorbing materials, pressure-dispersing materials, and so forth are currently frequently used in a variety of applications, for example, electrical/electronic applications, automotive applications, applications with precision equipment and instrumentation, sports, nursing care products, and other industrial and commercial products.

These materials/members may be used in the form of a simple formed article or gel material or may be used in the form of a composite material or composite formed article that combines two or more types of materials with the goal of obtaining a combination of functionalities.

Meanwhile, the materials used as shock-absorbing materials, vibration-damping materials, vibration-isolating materials, soundproof materials, sound-absorbing materials, and pressure-dispersing materials include foams such as polyurethane foams, ether types, ester types, various rubber sponges, polyethylene foams, Sunpelca, Opcell, Newpelca, PVC foams, and so forth, and polymer-based materials such as butyl rubbers, EVA, polynorbornenes, silicone gels, polyurethanes, epoxy resins, various liquid materials, and thermoplastic elastomers, and thus a variety of materials with excellent properties have been developed (Non Patent Literature 1).

However, each of these materials requires the application of heat for curing or forming and/or requires, for example, a mold in order to obtain the desired shape. Accordingly, in order to combine the characteristic features of these materials, it has been necessary to form each of them into a certain shape and then, as a separate step, combine them (Patent Literature 1, Patent Literature 2, Patent Literature 3). For example, when a thermosetting silicone gel is combined with a foam, for example, of polyurethane, there is then the problem that the properties of the polyurethane foam are impaired because of the inadequate heat resistance of the polyurethane foam when the curable silicone composition is cured on the foam.

### CITATION LIST

### PATENT LITERATURE

Patent Literature 1: JP H07-290626 A
Patent Literature 2: JP H07-17039 B
Patent Literature 3: JP 2002-78757 A

JP07-000205 discloses injection of a UV-curable polyurethane polymer into a cavity of a formed article.

### NON PATENT LITERATURE

Non Patent Literature 1: New Trends of Polymer Damping Materials & Applications (edited by Hitoshi Nishizawa, CMC Publishing Co., Ltd., published 30 September 1997)

### SUMMARY OF INVENTION

### TECHNICAL PROBLEM

An object of the present invention is to provide a composite article with a high degree of design freedom which combines the functionalities of each material without deteriorating the shape or performance of either material in the composite article.

### SOLUTION TO PROBLEM

In this context, the present inventor carried out focused investigations and as a result found that the problem identified above could be solved by a composite formed article comprising a formed article (A) and a rubber- or gel-like cured product (B), wherein the rubber- or gel-like cured product (B) is obtained by curing an active energy ray-curable composition (C), and by a forming method for producing a composite formed article, comprising injecting the curable composition (C) into a cavity in the formed article (A) and then curing the curable composition (C) by exposure to active energy rays to give the rubber- or gel-like cured product (B). The present invention was obtained based on the findings.

The present disclosure describes a composite formed article, comprising a formed article (A) and a rubber- or gel-like cured product (B), wherein the rubber- or gel-like cured product (B) is obtained by curing an active energy ray-curable composition (C).

The present invention relates to the use of a composite formed article according to claims 1 to 6; a shock-absorbing material, a pressure-dispersing material, a vibration-isolating material and a soundproof material, comprising the composite formed article as defined in any one of claims 1 to 6, respectively, according to claims 7 to 11, and a method for producing these materials according to claim 11.

The composite formed article according to
claim 2
is preferred in which the cured product (B) has
a hardness of less than 90 as a type E durometer hardness according to JIS K 6253.

The formed article (A) preferably has a heat resistant temperature of not more than 150°C.

The composite formed article is preferred in which the curable composition (C) contains a resin component (D) that is curable by active energy rays.

The composite formed article is preferred in which the resin component (D) contains at least one vinyl polymer that has a polymerizable carbon-carbon double bond at a molecular terminal.

The composite formed article is preferred in which the vinyl polymer (s) that has a polymerizable carbon-carbon double bond at a molecular terminal contains both a vinyl polymer that has a polymerizable carbon-carbon double bond at both terminals of the polymer and a vinyl polymer that has a polymerizable carbon-carbon double bond at one terminal of the polymer.

The composite formed article is preferred in which the vinyl polymer (s) that has a polymerizable carbon-carbon double bond at a molecular terminal is a (meth)acrylic polymer.

The composite formed article is preferred in which the vinyl polymer (s) that has a polymerizable carbon-carbon double bond at a molecular terminal has a molecular weight distribution of less than 1.8.

The composite formed article is preferred which is obtained by injecting the curable composition (C) into a cavity in the formed article (A) and then curing the curable composition (C) by exposure to active energy rays.

The composite formed article is preferred in which the formed article (A) has a hardness higher than that of the cured product (B).

The composite formed article is preferred in which the formed article (A) has a hardness lower than that of the cured product (B).

The present invention relates to a shock-absorbing material, a pressure-dispersing material, a vibration-isolating material, and a soundproof material each of which comprises the above-described composite formed article.

A forming method for producing a composite formed article is preferred which comprises injecting the curable composition (C) into a cavity in the formed article (A) and then curing the curable composition (C) by exposure to active energy rays to give the rubber- or gel-like cured product (B).

### ADVANTAGEOUS EFFECTS OF INVENTION

The composite formed article or the forming method for the composite formed article according to the present invention makes it possible to provide a composite article with a high degree of design freedom which combines the functionalities of each material without deteriorating the shape or performance of either material in the composite article.

### BRIEF DESCRIPTION OF DRAWINGS

Fig. 1 is a diagram of a sheet formed only of a foam according to Example 1 of the present invention;
Fig. 2 is a diagram of a sheet in which a gel-like cured product has been combined according to Example 1 of the present invention;
Fig. 3 is a diagram of a sheet in which a gel-like cured product has been combined according to Example 2 of the present invention;
Fig. 4 is a diagram of a sheet in which a gel-like cured product has been mounted according to Comparative Example 3 of the present invention; and
Fig. 5 is a graph showing the impact test results of Examples 3 and 4 and Comparative Examples 2 and 3 of the present invention.

### DESCRIPTION OF EMBODIMENTS

The composite formed article of the present invention is characterized by comprising a formed article (A) and a rubber- or gel-like cured product (B), the rubber- or gel-like cured product (B) being obtained by curing an active energy ray-curable composition (C), wherein the curable composition (C) contains a resin component (D) that is curable by active energy rays,
the component (D) contains both a vinyl polymer that has a polymerizable carbon-carbon double bond at both terminals of the polymer and a vinyl polymer that has a polymerizable carbon-carbon double bond at one terminal of the polymer, and
the composite formed article is obtained by injecting the curable composition (C) into a cavity in the formed article (A) and then curing the curable composition (C) by exposure to active energy rays.

The properties of this composite article can also be largely altered by changing the hardness of the formed article (A) and the hardness of the cured product (B). The hardness of the formed article (A) is preferably higher than the hardness of the cured product (B) because this leads to a composite formed article in which the cured product (B) acts as a shock-absorbing or buffering material whereby damage to the formed article (A) is avoided. For example, when a hard formed article (A) such as a resin material is made into a composite with a gel-like cured product (B) on the surface of the formed article, the cured product (B) then buffers impact so that damage to the cured article (A) is prevented.

Conversely, the hardness of the formed article (A) is preferably lower than the hardness of the cured product (B) because combining such materials has an effect, for example, in preventing more deformation of the formed article (A) than is necessary. For example, when a scallop-shaped cured product (B) is combined with a formed article (A) such as a foam, the combined cured product (B) buffers impact so as to inhibit deformation, whereas the formed article (A) alone may largely deform under impact or the impact may penetrate through it.

The components contained in the composite formed article of the present invention are described in detail in the following.

### < Formed article A >

Any material suited for the intended application can be used without particular limitations for the formed article (A) used in the present invention. Examples of such materials include, though are not limited to, foams such as polyurethane foams, ether types, ester types, various rubber sponges, polyethylene foams, Sunpelca, Opcell, Newpelca, PVC foams, and so forth, and polymer-based materials such as butyl rubbers, EVA, polynorbornenes, silicone gels, polyurethanes, epoxy resins, various liquid materials, and thermoplastic elastomers. Resins such as thermoplastic resins and thermosetting resins may also be used depending on the applications.

Examples of the resins include polyolefin resins; ethylene or α-olefin/vinyl monomer copolymers, e.g., ethylene/styrene copolymers, ethylene/methylstyrene copolymers, and ethylene/divinylbenzene copolymers; polydiene copolymers, e.g., polybutadiene and polyisoprene; vinyl monomer/diene monomer random copolymers, e.g., styrene/butadiene random copolymers; vinyl monomer/diene monomer/vinyl monomer block copolymers, e.g., styrene/butadiene/styrene block copolymers; hydrogenated (vinyl monomer/diene monomer random copolymers), e.g., hydrogenated (styrene/butadiene random copolymers); hydrogenated (vinyl monomer/diene monomer/vinyl monomer block copolymers), e.g., hydrogenated (styrene/butadiene/styrene block copolymers) ; vinyl monomer/diene monomer/vinyl monomer graft copolymers, e.g., acrylonitrile/butadiene/styrene graft copolymers and methyl methacrylate/butadiene/styrene graft copolymers; vinyl polymers such as polyvinyl chloride; polyvinylidene chloride, polyacrylonitrile, polyvinyl acetate, poly(meth)acrylate esters, and polystyrene; vinyl copolymers such as vinyl chloride/acrylonitrile copolymers, vinyl chloride/vinyl acetate copolymers, acrylonitrile/styrene copolymers, and methyl methacrylate/styrene copolymers; polycarbonate resins; polyester resins; polycarbonate resin/polyester resin mixtures; polyether resins; polyphenylene ether resins; polystyrene resin/polyphenylene ether resin mixtures; silicone resins; phenolic resins; epoxy resins; melamine resins; urea resins; polyimide; polyamide; polyacetal; polybutylene terephthalate (PBT); polyphenylene sulfide (PPS); Teflon (registered trademark); and polyetheretherketone (PEEK).

Additional examples include all or a portion of an animal or marine animal, e.g., bone, shell, horn, tusk, claw, tooth, fur, leather, feather, scale, and so forth; all or a portion of a plant, e.g., flower, fruit, seed, stem, trunk, branch, leaf, root, and so forth; fabrics; papers; yarns; fibers; glasses; metals; gemstones; rocks; minerals; sand; and so forth.

Specific examples in the case that the present invention is applied to, for example, shock-absorbing materials for shoes or pressure-dispersing materials for mattresses, include EVA materials and foams such as polyurethane foams.

Only one of the preceding materials may be used for the formed article (A) or two or more of them may be used in combination for the formed article (A). Also, the formed article (A) may be a foam or nonfoam.

### < Rubber- or gel-like cured product (B) >

The rubber- or gel-like cured product (B) used in the present invention is not particularly limited and any cured product can be used that assumes the properties of rubber or gel upon exposure to active energy rays. Examples of the active energy rays include ultraviolet rays, visible light, electron beam, LED light, radioactive rays, and so forth. The hardness of the cured product (B) can be adjusted according to the intended application and depending on the combination with the formed article (A) to be combined, and thus the cured product (B) can be made harder or softer than the formed article (A) in order to realize the desired functionalities.

The hardness of the cured product (B) is not particularly limited, but, for example, in those instances in which the composite formed article provided by the present invention is used as a shock-absorbing material, vibration-damping material, vibration-isolating material, soundproof material, pressure-dispersing material, or the like, the hardness is preferably less than 90, and more preferably less than 50, as a type E durometer hardness according to JIS K 6253. In those instances in which flexibility is required, the hardness is preferably less than 30, and in those instances where flexibility is particularly required, the hardness is particularly preferably less than 10. It can be set according to the application of the composite formed article provided by the present invention and the desired functionalities.

The cured product (B) is a cured product obtained by curing an active energy ray-curable composition (C) mentioned later. According to the present invention, curing by active energy rays to give the cured product (B) to be combined with the formed article (A) leads to much faster curing rate and improved productivity in comparison to the case in which a rubber- or gel-like cured product obtained by a conventional thermal curing is separately processed into a shape that enables the necessary functionalities and then is combined with a formed article (A). Also, when two or more types of formed articles are made into a composite, for example, a formed article (A) having a low heat resistance (e.g. EVA, foams such as polyurethane foams) is prone to deformation and degradation due to the heating during curing by a conventional thermal curing. On the other hand, the degradation of the formed article (A) can be suppressed in the case of curing by active energy rays according to the present invention.

Furthermore, when a composite article is obtained by a conventional thermal curing, since it is then difficult to simultaneously form a composite with a formed article (A) that is susceptible to thermal degradation as mentioned above, it has been necessary to separately prepare a cured product (B) that has been processed into a limited shape and then to mount it in the formed article (A). Accordingly, the functionalities of the obtained composite article are also limited and the design freedom for users designing the composite article is lowered as well.

In the present invention, on the other hand, the cured product (B) can be directly combined by, for example, preparing a mold with a complex shape or a narrow column mold on the formed article (A); injecting the curable composition (C) thereinto; and exposing it to active energy rays. This greatly increases the degree of design freedom.

Depending on the application, desired functionalities, and/or design of the composite formed article provided by the present invention, the cured product (B) may incorporate a decoration material, e.g., a colorant such as a dye or pigment or a metal powder (so-called glitter powder), and/or may incorporate voids or air bubbles.

### < Active energy ray-curable composition (C) >

The active energy ray-curable composition (C) in the present invention may be any curable composition that reacts upon exposure to active energy rays to give a cured product and is not particularly limited.

The curable composition (C) in the present invention characteristically contains a resin component (D) that is curable by active energy rays mentioned later. A curable composition adapted to different applications can be obtained as the curable composition (C) by incorporating, for example, a reactive diluent that is curable by active energy rays, various monomers, various oligomers, plasticizer, various fillers, initiator, curing enhancer, an agent for preventing cure inhibition, and other heretofore known additives in addition to the resin component (D).

There are no particular limitations on the initiator, and it can be determined according to, for example, the properties of the resin component (D) and the desired functionalities of the cured product (B). In the case that ultraviolet rays are used for the active energy rays, the use of a photocation generator (photoacid generator) as the initiator is preferred when the resin component (D) is a cationically polymerizable resin, e.g., an epoxy resin, as mentioned later, and the use of a photoradical generator as the initiator is preferred when the resin component (D) is a radical polymerizable resin as mentioned later.

There are no particular limitations on the method for preparing such a curable composition that cures by the action of active energy rays or on the method for adjusting the properties of the cured product, and the heretofore known art can be used here, for example, as described in JP 4176900 B, JP 2008-150502 A, WO 2007/069600, and WO 2007/029733.

### < Resin component (D) that is curable by active energy rays >

The resin component (D) that is curable by active energy rays in the present invention is not particularly limited as long as it generally undergoes reaction, crosslinking, and curing due to exposure to active energy rays . Examples thereof include cationically polymerizable resins that contain, for example, an epoxy group, oxetane group, or vinyl ether group as the group reactive to ultraviolet rays; radical polymerizable resins that contain a polymerizable carbon-carbon double bond such as a (meth)acryloyl group or unsaturated polyester group as the group reactive to ultraviolet rays; and resins that contain a hydrolyzable silyl group as the group reactive to ultraviolet rays.

Specific examples of the radical polymerizable resins that contain a polymerizable carbon-carbon double bond include heretofore known urethane acrylate oligomers, epoxy acrylate oligomers, polyester acrylate oligomers, and acrylic acrylate oligomers, as well as vinyl polymers having a carbon-carbon double bond at a molecular terminal as described in JP 4176900 B.

The resin component (D) preferably contains a group reactive to active energy rays, and further preferably has the active energy ray-reactive group at a molecular terminal in order to provide a flexible cured product (B).

The backbone skeleton of the resin component (D) is not particularly limited, and examples thereof include vinyl polymers, polycarbonate, polyester, polyphenylene ether, silicone, phenolic resins, epoxy resins, melamine resins, urea resins, polyimide, polyamide, polyacetal, Teflon (registered trademark), and polyetheretherketone. Vinyl polymers are preferred among the preceding from the standpoints of flexibility, heat resistance, chemical resistance, oil resistance, weather resistance, and compression set at elevated temperatures.

The monomer forming the backbone of the vinyl polymer is not particularly limited and various monomers can be used. Examples include (meth) acrylic monomers such as (meth) acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth) acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethylperfluoroethylmethyl (meth)acrylate, 2-perfluoromethy-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate; aromatic vinyl monomers such as styrene, vinyl ketones, α-methylstyrene, chlorostyrene, and styrenesulfonic acid, and salts thereof; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl or dialkyl esters of maleic acid; fumaric acid and monoalkyl or dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylonitrile monomers such as acrylonitrile and methacrylonitrile; amide group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; and conjugated dienes such as butadiene and isoprene; as well as vinyl chloride, vinylidene chloride, allyl chloride, allyl alcohol, and so forth. One of the preceding may be used alone or a plurality of the preceding may be copolymerized. Here, (meth)acrylic acid indicates acrylic acid and/or methacrylic acid.

The backbone of the vinyl polymer is preferably formed by polymerizing mainly at least one monomer selected from the group consisting of (meth)acrylic monomers, acrylonitrile monomers, aromatic vinyl monomers, fluorine-containing vinyl monomers, and silicon-containing vinyl monomers, and more preferably is a (meth)acrylic polymer formed by polymerizing mainly a (meth) acrylic monomer. Here, "mainly" means that the indicated monomer accounts for at least 50 mole%, preferably at least 70 mole%, of the monomer units constituting the vinyl polymer.

Aromatic vinyl monomers and (meth) acrylic monomers are preferred among the preceding from the standpoint, for example, of the product properties. Acrylate ester monomers and/or methacrylate ester monomers are more preferred, and acrylate ester monomers are particularly preferred. Specifically, particularly preferred acrylate ester monomers are ethyl acrylate, 2-methoxyethyl acrylate, stearyl acrylate, butyl acrylate, 2-ethylhexyl acrylate, and 2-methoxybutyl acrylate. In the present invention, these preferred monomers may be copolymerized or even block copolymerized with other monomers, at which time the content of these preferred monomers is preferably at least 40% by weight.

Butyl acrylate monomers are more preferred for, for example, general architectural and construction applications because such applications require that the curable composition exhibit a low viscosity and that the cured product exhibit properties such as low modulus, high elongation, weather resistance, heat resistance, and so forth. Also, in applications that require, for example, oil resistance, e.g., automotive applications, copolymers formed mainly from ethyl acrylate are more preferred. Such polymers formed mainly from ethyl acrylate exhibit excellent oil resistance, but have a tendency to exhibit somewhat poor low-temperature properties (cold resistance), and for this reason some ethyl acrylate monomers may be replaced by butyl acrylate in order to improve the low-temperature properties. However, the good oil resistance is impaired as the butyl acrylate proportion increases, and this proportion is therefore preferably low in applications where oil resistance is required. In addition, the use of, for example, 2-methoxyethyl acrylate or 2-ethoxyethyl acrylate, in which oxygen has been introduced into the side-chain alkyl group, is also preferred for improving the low-temperature properties and so forth without impairing the oil resistance. However, because the heat resistance tends to become poor by the introduction of an ether linkage-containing alkoxy group into the side chain, the proportion of such a monomer is preferably low when heat resistance is required. An appropriate polymer can be obtained by varying such proportions considering the necessary properties, e.g., oil resistance, heat resistance, or low-temperature properties, according to the particular applications and the desired objectives. Exemplary polymers that have an excellent balance among properties such as oil resistance, heat resistance, low-temperature properties, and so forth include, but are not limited to, ethyl acrylate/butyl acrylate/2-methoxyethyl acrylate (40 to 50%/20 to 30%/30 to 20% in molar ratio) copolymers.

The molecular weight distribution of the resin component (D), i.e., the ratio (Mw/Mn) of the weight-average molecular weight (Mw) to the number-average molecular weight (Mn), is not particularly limited, but, viewed from the standpoint of the ease of handling of the resin component (D) and curable composition (C) and the ease of control of the properties of the rubber- or gel-like cured product (B), the molecular weight distribution is preferably less than 1.8, more preferably not more than 1.7, even more preferably not more than 1.6, still more preferably not more than 1.5, particularly preferably not more than 1.4, and most preferably not more than 1.3.

The number-average molecular weight of the resin component (D) is not particularly limited, but, viewed from the standpoint of the properties of the resulting rubber- or gel-like cured product (B), is preferably at least 1, 000, more preferably at least 3,000, even more preferably at least 5,000, and particularly preferably at least 10,000. The cured product (B) may be brittle and/or may have low elongation when the number-average molecular weight of the resin component (D) is too low. Also, the number-average molecular weight of the resin component (D), when viewed from the standpoint of the ease of handling of the resin component (D) and the curable composition (C), is preferably not more than 1,000,000, more preferably not more than 500,000, even more preferably not more than 100,000, and particularly preferably not more than 50,000 although it is not particularly limited. The viscosity may increase and its handling may be difficult when the number-average molecular weight of the resin component (D) is too high.

The molecular weight and molecular weight distribution can be calculated by measurement by gel permeation chromatography (GPC). Generally, the GPC measurement uses chloroform as the mobile phase; the measurement is carried out on a polystyrene gel column; and the number-average molecular weight and so forth can be determined on the basis of a polystyrene calibration.

### (Method for synthesis of backbone)

The method for producing the resin component (D) is not particularly limited, and the use of controlled radical polymerization is preferred when the resin component (D) is a vinyl polymer. There are no limitations on the controlled radical polymerization, and living radical polymerization is preferred and atom transfer radical polymerization is more preferred.

### (Controlled radical polymerization)

In contrast to "general radical polymerization methods" in which a vinyl monomer and a monomer bearing a specific functional group are simply copolymerized using, for example, an azo compound or peroxide as the polymerization initiator, in "controlled radical polymerization methods" a specific functional group can be introduced in a controlled position, e.g., into a terminal.

In addition, "controlled radical polymerization methods" can be classified into a "chain transfer agent method", which can provide a vinyl polymer having a functional group at a terminal by carrying out polymerization using a chain transfer agent bearing a specific functional group, and a "living radical polymerization method", which can provide a polymer with a molecular weight nearly as designed, after the growth of a growing end of the polymer without occurrence of, for example, a termination reaction.

While being a radical polymerization -which is regarded as difficult to control due to the high polymerization rate and the ease of occurrence of a termination reaction by, for example, coupling between radicals-, the "living radical polymerization method" is less likely to cause a termination reaction and therefore can provide a polymer with a narrow molecular weight distribution (Mw/Mn = approximately 1.1 to 1.5), and also enables the molecular weight to be freely controlled by the charge ratio of the monomers and initiator.

Accordingly, the "living radical polymerization method" is more preferred as the method for producing the aforementioned vinyl polymer bearing a specific functional group because it can provide a polymer having a narrow molecular weight distribution and a low viscosity, and in addition because it enables the introduction of monomers bearing a specific functional group into almost any position in the polymer.

In a narrow sense, living polymerization refers to a polymerization in which the molecular chain growth proceeds with the end remaining active all the time; however, in a general sense it also includes pseudo-living polymerization in which the growth proceeds via an equilibrium between terminally inactivated species and terminally active species. The definition in the present invention is also the same as the latter.

Various methods have been proposed for implementing living radical polymerization and each method suggests a mechanism for the reversible generation of active radical species from the growing end of the polymer. The known methods can be used without particular limitations for the method for producing the resin component (D) used in the present invention. Among the living radical polymerization methods, methods that use an organic halide as the initiator are preferred since the polymer terminal then has an organic halide structure that can be easily converted into various functional groups. In addition, methods that use an organic halide as the initiator, because they can utilize easily acquired compounds as the initiator, are preferred over methods that require a specialty reagent that enables living radical polymerization in an amount equal (equimolar) to the growing end of the polymer. When an organic halide is used as the initiator, although there are no particular limitations on the catalyst used in combination therewith, it is preferably a catalyst that reversibly undergoes oxidation-reduction in order for the organic halide to be in equilibrium with the active radical species.

Thus, although there are no particular limitations on the method for producing the resin component (D) used in the present invention, the polymerization preferably proceeds via an equilibrium between an organic halide and the active radical species, accompanied by reversible oxidation-reduction of the catalyst, and among such methods atom transfer radical polymerization is particularly preferred.

### (Position of active energy ray-reactive group)

When rubbery properties are particularly required of the cured product (B) obtained by curing the curable composition (C) in the present invention, at least one active energy ray-reactive group in the resin component (D) is preferably present at a molecular chain terminal in order to provide a large value for the molecular weight between crosslinks, which exercises a major influence on the rubber elasticity. More preferably, each of all active energy ray-reactive groups is present at a molecular chain terminal.

### (Type of active energy ray-reactive group)

The active energy ray-reactive group is not particularly limited and examples thereof include an epoxy group, an oxetane group, a vinyl ether group, a hydrolyzable silyl group, and a group containing a polymerizable carbon-carbon double bond. Examples of the group containing a polymerizable carbon-carbon double bond include groups represented by general formula (1) below, and unsaturated polyester groups.

The group containing a polymerizable carbon-carbon double bond is preferably a group represented by general formula (1):

-OC(O)C(R¹)=CH₂ (1)

wherein R¹ represents hydrogen or a C₁₋₂₀ monovalent organic group.

Specific examples of R¹ in general formula (1) include, but are not limited to, -H, -CH₃, -CH₂CH₃, -(CH₂)ₙCH₃ (n represents an integer from 2 to 19), -C₆H₅, -CH₂OH, -CN, and so forth, and preferred is -H or -CH₃. That is, a (meth)acryloyl group is preferred for the group containing a polymerizable carbon-carbon double bond.

In order to obtain the rubber- or gel-like cured product (B) in the present invention, for example, a combination of a vinyl polymer that has a polymerizable carbon-carbon double bond at both terminals of the polymer and a vinyl polymer that has a polymerizable carbon-carbon double bond at one terminal of the polymer can be used and cured by active energy rays, which enables control of the hardness and properties of the cured product.

Such active energy ray-curable vinyl polymers that have a carbon-carbon double bond at a molecular terminal, particularly (meth)acrylic polymers that have a (meth)acryloyl group at a molecular terminal, and curable compositions that contain these polymers, and methods for adjusting the hardness of the cured product are disclosed, for example, in JP 4176900 B, JP 2008-150502 A, and WO 2007/069600.

### < Combining method for composite formed article >

The composite formed article comprising the formed article (A) and the rubber- or gel-like cured product (B) according to the present invention is preferably obtained by injecting the curable composition (C) into, for example, a cavity in the formed article (A) and then curing the curable composition (C) by exposure to active energy rays to give the cured product (B).

There are no particular limitations on the shape of this cavity, and, for example, a shape that realizes a preferred functionality in the particular application may be defined and the curable composition (C) may be injected thereinto. The present invention also encompasses the execution of curing after fine spaces in the formed article (A) have been impregnated/permeated with the curable composition (C).

Examples of the active energy rays include ultraviolet rays, visible light, LED light, electron beam, and radioactive rays. Among these, ultraviolet rays are preferred from the standpoint, for example, of the versatility of the output device, ease of handling and the properties of the resulting cured product.

Also, the curable composition (C) needs not be directly irradiated with active energy rays. For example, when a formed article (A) is used that is permeable to certain active energy rays, the curable composition (C) may be cured and combined by the active energy rays that has permeated through the formed article. Specifically, for example, when an opening is present at the top of the formed article (A) and the curable composition (C) is injected therethrough, the active energy rays may be irradiated not just from the top, but also from the side and the bottom.

Moreover, a desired composite formed article comprising a formed article (A) and a rubber- or gel-like cured product (B) can also be obtained by placing the formed article (A) in the uncured liquid curable composition (C) and then irradiating this with active energy rays.

Polyurethane gels and silicone gels are mentioned as examples of conventional gel materials, and both materials require, in many cases, a heating step at a temperature of at least 100°C for at least 1 hour to obtain the cured product from the liquid starting material, and in some cases, a high-temperature or lengthy secondary curing step is also required.

The forming method of the present invention can be used even when the formed article (A) has low heat resistance. For example, there have been limitations on the heretofore known thermal forming/processing methods in the case of combinations with a formed article (A) having a heat resistant temperature of not more than 150°C; however, the forming method of the present invention, in which the curable composition (C) is cured by active energy rays, enables forming/processing without causing deformation/degradation of the formed article (A). Furthermore, the forming method of the present invention can be suitably used even when the heat resistant temperature of the formed article (A) is less than or equal to 130°C, particularly less than or equal to 100°C.

The composite formed article obtained by such a combining method is a highly functional composite formed article because the functionality of the formed article (A) is not impaired and because the degree of design freedom is higher than when a cured product (B) obtained by thermal curing or the like is combined. For example, a scallop-shaped mold (cavity) is formed in a sheet-shaped foam formed article (A) ; the curable composition (C) is injected thereinto; and active energy rays are applied to provide the cured product (B).

Moreover, a rubber- or gel-like cured product (B) having a desired shape can be easily obtained by preparing the composite formed article from a formed article (A) having the desired cavity and thereafter removing the rubber- or gel-like cured product (B) from the formed article (A).

The active energy rays used in the present invention may be active energy rays in general use, and examples thereof include ultraviolet rays, visible light, UV-LED light, electron beam, radioactive rays, and so forth.

The dose of active energy rays can be adjusted by varying, for example, the intensity of irradiation energy, the cumulative amount of energy, and so forth, and, when a heat-vulnerable formed article (A) is used, for example, the intensity of irradiation energy may be reduced while the cumulative amount of energy is adjusted by, for example, increasing the exposure time and/or the number of exposures.

When the active energy rays are ultraviolet rays, the intensity of irradiation energy is generally known as the irradiance or peak irradiance or simply the irradiance. This is the radiated energy flux per unit time per unit area and is specified in unit of, for example, W/m² or mW/cm². The irradiance during the curing of the curable composition (C) is not particularly limited, and, since a higher irradiance allows curing in less time, the irradiance is preferably at least 50 mW/cm², more preferably at least 100 mW/cm², even more preferably at least 200 mW/cm², and preferably at least 400 mW/cm². However, the irradiance can be set making appropriate adjustments when, for example, degradation of the formed article (A) may be caused by heat or thermal radiation generated from the light source.

When the active energy rays are ultraviolet rays, the cumulative amount of energy is generally known as the energy density and indicates how much time light of a certain intensity is irradiated. The energy density is the value of the time integral of the irradiance and is specified in unit of, for example, J/m² or mJ/cm². The energy density corresponds to the amount of energy that the irradiation target receives per unit area. The energy density during the curing of the curable composition (C) is not particularly limited, and, since a higher energy density allows deeper curing, the energy density is preferably at least 500 mJ/cm², more preferably at least 1,000 mJ/cm², even more preferably at least 2,000 mJ/cm², and preferably at least 3,000 mJ/cm². However, since the deep curability may also depend on the irradiance when the curable composition (C) has low permeability to ultraviolet rays, the energy density is not limited to the preceding and can be set making appropriate adjustments according to the properties of the formed article (A) and the cured product (B), the activity of the curable composition (C) with respect to ultraviolet rays, and so forth.

Unless otherwise indicated, the irradiance and energy density in the present invention are the values at a wavelength of 365 nm.

In the case that the active energy rays are ultraviolet rays and the curable composition (C) is radical polymerizable, the curability at the surface may be deteriorated when curing is carried out in the presence of oxygen, e.g., in air; in this case, however, the poor curability or tacky feel at the surface of the cured product can be alleviated by curing the curable composition (C) in an inert gas, e.g., in a nitrogen atmosphere. In addition, the curability at the surface can also be improved by putting, for example, a film on the surface of the curable composition (C) or coating the surface with a liquid, then carrying out curing, and thereafter removing it.

### < Applications >

The composite formed article of the present invention can be used in a variety of applications by virtue of its high degree of design freedom. Examples include shock-absorbing materials, shock-relaxing materials, vibration-absorbing materials, vibration-insulating materials, vibration-transmitting materials, displacement-absorbing materials, displacement-transmitting materials, stress-absorbing materials, stress-relaxing materials, stress-transmitting materials, pressure-dispersing materials, vibration-isolating materials, vibration-damping materials, packaging materials, soundproof materials, sound-absorbing materials, sound-isolating materials, insulating materials, moistureproof materials, anticorrosion materials, antirust materials, and so forth. The following are examples of applications in which these materials are used: sports products such as shoes and protectors; products for health, medical, and nursing care, such as bedding, pillows, cushions, mattresses, and injury prevention pads; applications to electrical/electronic devices, such as clocks, portable phones, cameras, scanners, personal computers, printers, information storage devices (memory), gaming devices, electronic dictionaries, music reproducing devices, televisions, video recorders, DVD players/recorders, blu-ray disk players/recorders, projectors, image reproduction devices, stepping motors, magnetic disks, hard disks, microphones, sound recorders, telephones, refrigerators, rice cookers, ovens, microwave ovens, electromagnetic cookers, dishwashers, air conditioners, electric fans, air purifiers, humidifiers, dehumidifiers, cleaners, dryers, washing machines, irons, fan heaters, sewing machines, warm water washing toilet seats, lighting systems, scales, blood pressure meters, thermometers, pedometers, hearing aids, personal care appliances, vending machines, speaker frames, BS antennas, and VTRs; architectural and construction applications such as roofs, floors, shutters, curtain rails, floors, pipes and ducts, deck plates, curtain walls, stairs, doors, vibration isolators, and structural materials; ship applications such as engine rooms and instrument rooms; automotive applications such as engines (oil pans, front covers, rocker covers), bodies (dashboards, floors, doors, roofs, panels, wheel housings), transmissions, parking brake covers, seat backs, sealing materials, onboard electronic components, car televisions, automotive audio systems, and automotive navigation systems; applications to cameras and office equipment, such as TV cameras, copiers, computers, printers, registers, and cabinets; applications related to industrial machinery, such as electrical tools, chutes, elevators, escalators, conveyors, tractors, bulldozers, generators, compressors, containers, hoppers, soundproof boxes, and engine covers for mowers; railroad applications such as railway vehicle roofs, side panels, doors, underfloors, covers for various auxiliary machinery, and bridges; precision vibration-insulating devices, e.g., for semiconductor applications; and soundproof materials, e.g., for high-frequency sound and low-frequency sound near the audible threshold.

### EXAMPLES

Specific examples of the present invention are described below along with comparative examples, but the present invention is not limited to these examples.

A Light Hammer 6 and an H bulb from Fusion UV System Japan were used as an ultraviolet irradiator in the following examples . A UIT-150-A (sensitive wavelength range = 310 to 390 nm, calibration wavelength = 365 nm) UV energy density meter from Ushio Inc. was used to measure the peak irradiance and energy density. A type E durometer according to JIS K 6253 was used to measure the hardness.

### (Preparation of sheet-shaped foam resin formed article)

### Synthesis of allyl group-terminated polypropylene oxide polymer

Propylene oxide was polymerized using a polyoxypropylene diol with a molecular weight of approximately 10,000 as the initiator and a zinc hexacyanocobaltate/glyme complex catalyst to obtain a polypropylene oxide with a number-average molecular weight of approximately 28,500 (polystyrene-equivalent molecular weight measured using an HLC-8120 GPC liquid delivery system from Tosoh Corporation, a TSK-GEL H column from Tosoh Corporation, and a THF solvent).

Then, a methanol solution of NaOMe was added in an amount of 1.2 equivalents to the number of hydroxyl groups of this hydroxyl group-terminated polypropylene oxide; the methanol was removed by distillation; and allyl chloride was then added to convert the terminal hydroxyl group to an allyl group.

300 parts by weight of n-hexane and 300 parts by weight of water were mixed and stirred with 100 parts by weight of the obtained unpurified allyl-terminated polypropylene oxide; the water was subsequently removed by centrifugal separation; another 300 parts by weight of water was mixed and stirred with the resulting hexane solution and the water was again removed by centrifugal separation; and the hexane was removed by evaporation at reduced pressure. As a result, an allyl group-terminated difunctional polypropylene oxide was obtained that had a number-average molecular weight of approximately 28,500.

### Preparation of polyoxypropylene oxide foam

7.7 parts by weight of ethanol as a blowing agent and 0.03225 parts by weight of an isopropanol solution (platinum content: 3 wt%) of a platinum/vinylsiloxane complex as a catalyst were added to 100 parts by weight of the allyl group-terminated polypropylene oxide polymer obtained as above, and they were mixed thoroughly. Then, 12 parts by weight of methyl hydrogen silicone oil (KF-99: Shin-Etsu Chemical Co., Ltd.) was added as a curing agent and mixed rapidly.

This mixture was injected into a 1 cm-thick mold and curing was carried out by heating for 60 minutes in an oven set at 40°C to obtain a sheet-shaped foam resin formed article whose base resin was the polyoxypropylene oxide polymer. The hardness of this foam resin formed article was 0.

### (Preparation of active energy ray-curable composition)

In the production examples provided below, "parts" and "%" denote "parts by weight" and "% by weight", respectively. In addition, the "triamine" in these examples refers to pentamethyldiethylenetriamine.

In the examples that follow, the "weight-average molecular weight" and "molecular weight distribution (ratio between the weight-average molecular weight and the number-average molecular weight) " were calculated on the basis of a polystyrene standard calibration by gel permeation chromatography (GPC). Here, GPC columns packed with a crosslinked polystyrene gel (Shodex GPC K-804, K-802.5; from Showa Denko) and chloroform as the GPC solvent were used. Also, the number of functional groups introduced per molecule of the polymer was calculated on the basis of concentration analysis by ¹H-NMR and the number-average molecular weight determined by GPC. The NMR measurement was performed at 23°C using an ASX-400 from Bruker and using deuterated chloroform as the solvent.

### Production Example 1

### Method for producing poly(n-butyl acrylate) having acryloyl group at both terminals

100 parts of n-butyl acrylate was deoxygenated. The interior of a reactor was deoxygenated; 0.42 parts of cuprous bromide, 20 parts of the deoxygenated n-butyl acrylate, 4.4 parts of acetonitrile, and 1.8 parts of diethyl 2,5-dibromoadipate were added and mixed at 80°C; and a polymerization reaction was initiated by adding 0.018 parts of pentamethyldiethylenetriamine (abbreviated below as triamine) . The remaining 80 parts of n-butyl acrylate was added gradually to allow the polymerization reaction to proceed. During the polymerization, the polymerization rate was adjusted by further adding the triamine appropriately, and the polymerization was allowed to proceed with the interior temperature being adjusted to approximately 80°C to approximately 90°C. An oxygen-nitrogen mixed gas was introduced into the vapor phase of the reactor at the point at which the monomer conversion ratio (polymerization reaction ratio) reached at least about 95%, and then heating and stirring were carried out with the interior temperature being maintained at approximately 80°C to approximately 90°C. Concentration was performed by removing the volatile fraction under reduced pressure. The residue was diluted with butyl acetate, and a filter aid was added to perform filtration. Adsorbents (Kyowaad 700SEN, Kyowaad 500SH, from Kyowa Chemical Industry Co., Ltd.) were added to the filtrate, and the mixture was heated and stirred and then filtered, and the filtrate was concentrated. The residue was dissolved in N,N-dimethylacetamide; potassium acrylate (approximately 2 molar equivalents to the number of terminal Br groups), a thermal stabilizer (H-TEMPO: 4-hydroxy-2,2,6,6-tetramethylpiperidine-N-oxyl), and an adsorbent (Kyowaad 700SEN) were added; and heating and stirring at approximately 70°C were carried out. The volatile fraction was removed by distillation under reduced pressure followed by dilution with butyl acetate, addition of a filter aid, and filtration. The filtrate was concentrated to obtain a polymer [P1] that had an acryloyl group as an ultraviolet-crosslinkable group at both terminals. The polymer [P1] had a number-average molecular weight of 22,500 and a molecular weight distribution of 1.25, and the average number of acryloyl groups introduced per molecule of the polymer was 1.9.

### Production Example 2

### Method for producing poly(n-butyl acrylate) having acryloyl group at one terminal

100 parts of n-butyl acrylate was deoxygenated. The interior of a reactor was deoxygenated; 0.42 parts of cuprous bromide, 20 parts of the deoxygenated n-butyl acrylate, 4.4 parts of acetonitrile, and 1.9 parts of ethyl α-bromobutyrate were added and mixed at 80°C; and a polymerization reaction was initiated by adding 0.018 parts of pentamethyldiethylenetriamine (abbreviated below as triamine) . The remaining 80 parts of n-butyl acrylate was added gradually to allow the polymerization reaction to proceed. During the polymerization, the polymerization rate was adjusted by further adding the triamine appropriately, and the polymerization was allowed to proceed with the interior temperature being adjusted to approximately 80°C to approximately 90°C. An oxygen-nitrogen mixed gas was introduced into the vapor phase of the reactor at the point at which the monomer conversion ratio (polymerization reaction ratio) reached at least about 95%, and then heating and stirring were carried out with the interior temperature being maintained at approximately 80°C to approximately 90°C. Concentration was performed by removing the volatile fraction under reduced pressure. The residue was diluted with butyl acetate, and a filter aid was added to perform filtration. Adsorbents (Kyowaad 700SEN, Kyowaad 500SH; from Kyowa Chemical Industry Co., Ltd.) were added to the filtrate, and the mixture was heated and stirred and then filtered, and the filtrate was concentrated. The residue was dissolved in N,N-dimethylacetamide; potassium acrylate (approximately 2 molar equivalents to the number of terminal Br groups), a thermal stabilizer (H-TEMPO: 4-hydroxy-2,2,6,6-tetramethylpiperidine-N-oxyl), and an adsorbent (Kyowaad 700SEN) were added; and heating and stirring at approximately 70°C were carried out. The volatile fraction was removed by distillation under reduced pressure followed by dilution with butyl acetate, addition of a filter aid, and filtration. The filtrate was concentrated to obtain a polymer [P2] that had an acryloyl group as an ultraviolet-crosslinkable group at one terminal. The obtained polymer [P2] had a weight-average molecular weight Mw of 12,760 and a molecular weight distribution of 1.10, and the average number of acryloyl groups introduced per molecule of the polymer was 1.0.

### Blend Example

1 part of the antioxidant IRGANOX1010, 0.2 parts of the photoradical initiator 2-hydroxy-2-methyl-1-phenylpropan-1-one (DAROCURE1173; from Ciba Specialty Chemicals Inc.), and 0.1 parts of bis(2,4,6-trimethylbenzoyl)phenylphosphine oxide (IRGACURE819; from Ciba Specialty Chemicals Inc.) were added to 30 parts of the polymer [P1] obtained in Production Example 1 and 70 parts of the polymer [P2] obtained in Production Example 2 and thorough dissolution and mixing were carried out. Then, the mixture was heated and degassed for 1 hour at 60°C to provide an active energy ray-curable composition [C-1].

### Example 1

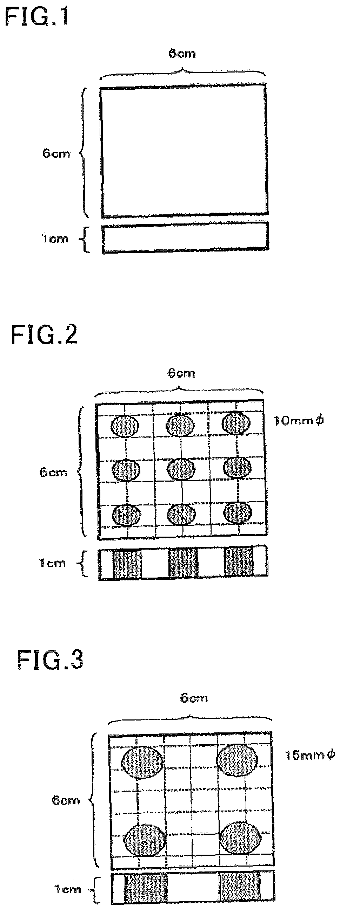

The 1 cm-thick polyoxypropylene oxide foam sheet obtained as above was cut to 6 cm square (Fig. 1) and scallop-shaped cavities with φ 10 mm were cut out as shown in Fig. 2.

The curable composition [C-1] was injected into these scallop-shaped cavities and irradiated with ultraviolet rays to form a composite of gel-like cured products in the cavities shown in Fig. 2. At that time the peak irradiance of ultraviolet rays was 1,300 mW/cm² and the energy density was 3,000 mJ/cm². The gel-like cured products had a hardness of 7.

No deformation of the shape of the foam was observed during the composite formation, and in terms of time the target composite article could be obtained in a short period of time of about 1 minute.

### Example 2

The same procedures were used as in the example with the exception that the curable composition [C-1] was injected into φ 15 mm scallop-shaped cavities shown in Fig. 3 rather than in Fig. 2. As a result, a composite of the gel-like cured products in the cavities shown in Fig. 3 was formed.

The number of scallops was adjusted so that the weight of [C-1] injected was the same as in Example 1.

As in Example 1, no deformation of the shape of the foam was observed during the composite formation, and in terms of time the target composite article could be obtained in a short period of time of about 1 minute.

### Comparative Example 1

The foam sheet of Fig. 1 was held in a 140°C environment for 1 hour, which can be employed as the curing conditions for existing thermosetting gels. As a result, the shape of the foam sheet was not maintained and underwent substantial deformation.

For this reason, it was difficult to simultaneously form a composite of the foam and the thermosetting gel.

### (Impact test)

An 8 kg weight (flat plate) was dropped from a drop height of 100 mm and the maximum acceleration during the collision with each composite article was measured. The measurement was carried out five times, and the average value thereof was taken.

### Example 3

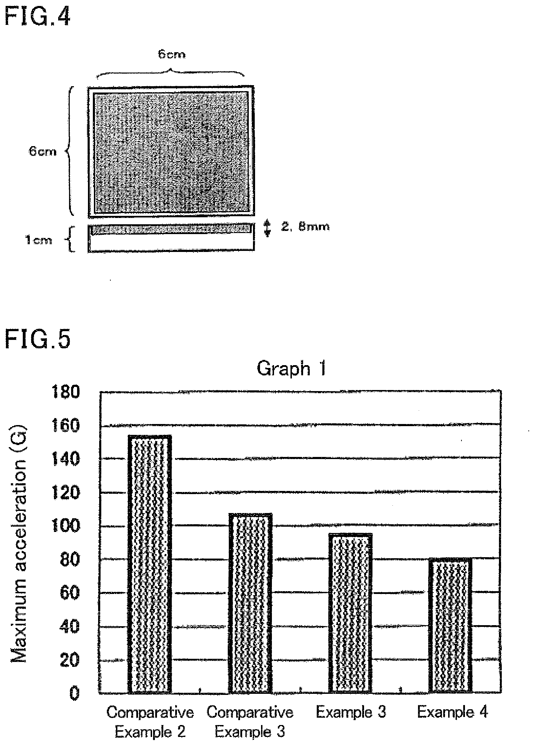

The impact test was performed on the composite article obtained in Example 1. The resulting value of the maximum acceleration is shown in Fig. 5.

### Example 4

The impact test was performed on the composite article obtained in Example 2. The resulting value of the maximum acceleration is shown in Fig. 5.

### Comparative Example 2

The impact test was performed on the foam of Fig. 1 alone. The resulting value of the maximum acceleration is shown in Fig. 5.

### Comparative Example 3

The curable composition [C-1] was cured into a 2.8 mm-thick sheet. The size of this sheet was adjusted to give the same weight as the scallop-shaped gel-like cured products in Examples 1 and 2 and then, in a separate step, it was placed on the surface of the foam of Fig. 1 as shown in Fig. 4.

The impact test was performed on this composite article. The resulting value of the maximum acceleration is shown in Fig. 5.

From the results of Examples 1 and 2 and Comparative Example 1, it was possible for curing by active energy rays to combine a gel-like cured product even with a foam that would undergo thermal degradation by thermal curing, without causing deformation or degradation of the foam base material. The insertion of separately thermally cured scallop-shaped gel-like cured products into the holes in the foam is considered to be difficult; however, composite articles could be easily obtained by injecting an active energy ray-curable composition into the holes and curing it, as in Examples 1 and 2. In addition, it was also easy to alter the shape, e.g., the width, as in Examples 1 and 2.

Moreover, a substantial impact-relaxing effect was observed in Examples 3 and 4 in which gel-like cured products were placed, in contrast to the very large impact applied in the impact test on the foam in Comparative Example 2 alone.

Furthermore, in comparison to Comparative Example 3 in which the same weight of a sheet-shaped gel-like cured product was placed, the degree of impact was more attenuated in Examples 3 and 4 in which scallop-shaped gel-like cured products were placed, and in particular Example 4, in which the diameter of the scallop was larger, exhibited a larger effect than that with a smaller diameter.

It can be anticipated that the degree of design freedom for the shape will be increased in terms of, for example, impact, when an active energy ray-curable gel, for example, is used as above.

### Example 5

A cavity with depth 5 mm × φ 10 mm was formed in a commercial EVA foam plate (hardness = 50, 10 cm × 10 cm × 1 cm) and the curable composition [C-1] was injected thereinto. Then, exposure to ultraviolet rays provided a composite formed article comprising the EVA foam and the gel-like cured product. At that time the peak irradiance of ultraviolet rays was 400 mW/cm² and the energy density was 3,000 mJ/cm², and the EVA foam did not undergo changes such as discoloration or deformation by the ultraviolet ray curing process.

### Comparative Example 4

When an EVA foam plate as used in Example 5 was held in a 90°C environment for 1 hour, the EVA foam plate did not maintain its shape and underwent substantial deformation. For this reason, it was difficult to simultaneously form a composite of the EVA foam plate and a thermosetting gel.

### Example 6

The curable composition [C-1] was injected into a commercial cylindrical polystyrene container (hardness = 100, φ 4 cm × depth 2 cm) and exposed to ultraviolet rays to obtain a composite formed article comprising the polystyrene and the gel-like cured product. At that time the peak irradiance of ultraviolet rays was 400 mW/cm² and the energy density was 3,000 mJ/cm², and the polystyrene container did not undergo changes such as discoloration or deformation by the ultraviolet ray curing process.

### Comparative Example 5

When a polystyrene container as used in Example 6 was held in an 80°C environment for 1 hour, the polystyrene container underwent deformation. For this reason, it was difficult to simultaneously form a composite of the polystyrene container and a thermosetting gel.

### Example 7

The curable composition [C-1] was coated to a thickness of approximately 800 µm on a commercial poly(methyl methacrylate) (PMMA) film (10 cm × 10 cm × 100 µm) and exposed to ultraviolet rays to obtain a composite formed article (laminate) comprising the PMMA film and the gel-like cured product. At that time the peak irradiance of ultraviolet rays was 120 mW/cm² and the energy density was 900 mJ/cm², and the PMMA film did not undergo changes such as discoloration or deformation by the ultraviolet ray curing process.

### Comparative Example 6

When a PMMA film as used in Example 7 was held in a 100°C environment for 1 hour, the PMMA film underwent deformation. For this reason, it was difficult to simultaneously form a composite of the PMMA film and a thermosetting gel.

### Example 8

250 g of the curable composition [C-1] was injected into a commercial polyethylene bag (20 cm × 14 cm × 40 µm in thickness) and this bag was sealed. Ultraviolet rays were irradiated from above the bag (i.e., in a manner to allow the rays to be transmitted across the polyethylene to the curable composition) . The peak irradiance of the irradiated ultraviolet rays was 265 mW/cm² and the energy density was 275 mJ/cm²; however, since the bottom of the bag interior was partially uncured, the bag was flipped upside down and an additional exposure to ultraviolet rays at a peak irradiance of 265 mW/cm² and an energy density of 275 mJ/cm² was carried out, whereby the bag interior was completely cured. Then the polyethylene bag did not undergo changes such as discoloration or deformation by the ultraviolet ray curing process.

### Comparative Example 7

When a polyethylene bag as used in Example 8 was held in an 80°C environment for 1 hour, the polyethylene bag underwent deformation. For this reason, it was difficult to simultaneously form a composite of the polyethylene bag and a thermosetting gel.

### INDUSTRIAL APPLICABILITY

The present invention not only has an effect in improving the shock-absorbing properties of the foams in the examples, but also enables combinations with base materials for various applications and therefore can be expected to allow the design of, for example, the impact-relaxing properties, vibration-damping properties, and so forth at a high degree of freedom. Thus, the present invention can be suitably applied to, for example, shock-absorbing materials, pressure-dispersing materials, vibration-damping materials, vibration-isolating materials, packaging materials, soundproof materials, sound-absorbing materials, sound-insulating materials, and so forth.

## Claims

1. Use of a composite formed article for a shock-absorbing material, a pressure-dispersing material, a vibration-isolating material, or a soundproof material,
wherein the composite formed article comprises a formed article (A) and a rubber- or gel-like cured product (B),
wherein the rubber- or gel-like cured product (B) is obtained by curing an active energy ray-curable composition (C),
the curable composition (C) contains a resin component (D) that is curable by active energy rays,
the component (D) contains both a vinyl polymer that has a polymerizable carbon-carbon double bond at both terminals of the polymer and a vinyl polymer that has a polymerizable carbon-carbon double bond at one terminal of the polymer, and
the composite formed article is obtained by injecting the curable composition (C) into a cavity in the formed article (A) and then curing the curable composition (C) by exposure to active energy rays.

2. The use according to claim 1, wherein the cured product (B) has a hardness of less than 90 as a type E durometer hardness according to JIS K 6253.

3. The use according to claim 1 or 2, wherein the vinyl polymer(s) that has(have) a polymerizable carbon-carbon double bond at a molecular terminal is (are) a (meth)acrylic polymer.

4. The use according to any one of claims 1 to 3, wherein the vinyl polymer(s) that has (have) a polymerizable carbon-carbon double bond at a molecular terminal has (have) a molecular weight distribution of less than 1.8.

5. The use according to any one of claims 1 to 4, wherein the formed article (A) has a hardness higher than that of the cured product (B).

6. The use according to any one of claims 1 to 4, wherein the formed article (A) has a hardness lower than that of the cured product (B).

7. A shock-absorbing material comprising the composite formed article as defined in any one of claims 1 to 6.

8. A pressure-dispersing material comprising the composite formed article as defined in any one of claims 1 to 6.

9. A vibration-isolating material comprising the composite formed article as defined in any one of claims 1 to 6.

10. A soundproof material comprising the composite formed article as defined in any one of claims 1 to 6.

11. A method for producing a shock-absorbing material, a pressure-dispersing material, a vibration-isolating material, or a soundproof material,
comprising the step of producing a composite formed article as defined in any one of claims 1 to 6,
the method of producing the composite formed article comprising injecting the curable composition (C) into a cavity in the formed article (A) and then curing the curable composition (C) by exposure to active energy rays to give the rubber- or gel-like cured product (B).

## Patentansprüche

1. Verwendung eines Verbundstoffformgegenstands für ein stoßdämpfendes Material, ein druckverteilendes Material, ein schwingungsisolierendes Material oder ein schalldichtes Material,
wobei der Verbundstoffformgegenstand einen Formgegenstand (A) und ein kautschuk- oder gelartiges gehärtetes Produkt (B) umfasst,
wobei das kautschuk- oder gelartige gehärtete Produkt (B) durch Härten einer mit aktiven Energiestrahlen härtbaren Zusammensetzung (C) erhalten wird,
die härtbare Zusammensetzung (C) eine Harzkomponente (D) enthält, die mit aktiven Energiestrahlen härtbar ist,
die Komponente (D) sowohl ein Vinylpolymer, das eine polymerisierbare Kohlenstoff-Kohlenstoff-Doppelbindung an beiden Enden des Polymers aufweist, als auch ein Vinylpolymer, das eine polymerisierbare Kohlenstoff-Kohlenstoff-Doppelbindung an einem Ende des Polymers aufweist, enthält und
der Verbundstoffformgegenstand durch Einspritzen der härtbaren Zusammensetzung (C) in einen Hohlraum in dem Formgegenstand (A) und anschließendes Härten der härtbaren Zusammensetzung (C), indem man sie aktiven Energiestrahlen aussetzt, erhalten wird.

2. Die Verwendung nach Anspruch 1, wobei das gehärtete Produkt (B) eine Härte von weniger als 90 als Typ E-Durometerhärte gemäß JIS K 6253 aufweist.

3. Die Verwendung nach Anspruch 1 oder 2, wobei das/die Vinylpolymer(e), das/die eine polymerisierbare Kohlenstoff-Kohlenstoff-Doppelbindung an einem Molekülende aufweist/aufweisen, ein (Meth)acrylpolymer ist/sind.

4. Die Verwendung nach einem der Ansprüche 1 bis 3, wobei das/die Vinylpolymer(e), das/die eine polymerisierbare Kohlenstoff-Kohlenstoff-Doppelbindung an einem Molekülende aufweist/aufweisen, eine Molekulargewichtsverteilung von weniger als 1,8 aufweist/aufweisen.

5. Die Verwendung nach einem der Ansprüche 1 bis 4, wobei der Formgegenstand (A) eine Härte aufweist, die höher ist als die des gehärteten Produkts (B).

6. Die Verwendung nach einem der Ansprüche 1 bis 4, wobei der Formgegenstand (A) eine Härte aufweist, die niedriger ist als die des gehärteten Produkts (B).

7. Ein stoßdämpfendes Material, umfassend den Verbundstoffformgegenstand wie in einem der Ansprüche 1 bis 6 definiert.

8. Ein druckverteilendes Material, umfassend den Verbundstoffformgegenstand wie in einem der Ansprüche 1 bis 6 definiert.

9. Ein schwingungsisolierendes Material, umfassend den Verbundstoffformgegenstand wie in einem der Ansprüche 1 bis 6 definiert.

10. Ein schalldichtes Material, umfassend den Verbundstoffformgegenstand wie in einem der Ansprüche 1 bis 6 definiert.

11. Ein Verfahren zur Herstellung eines stoßdämpfenden Materials, eines druckverteilenden Materials, eines schwingungsisolierenden Materials oder eines schalldichten Materials, umfassend den Schritt des Herstellens eines Verbundstoffformgegenstands wie in einem der Ansprüche 1 bis 6 definiert,
wobei das Verfahren des Herstellens des Verbundstoffformgegenstands Einspritzen der härtbaren Zusammensetzung (C) in einen Hohlraum in dem Formgegenstand (A) und anschließendes Härten der härtbaren Zusammensetzung (C), indem man sie aktiven Energiestrahlen aussetzt, um das kautschuk- oder gelartige gehärtete Produkt (B) zu ergeben, umfasst.

## Revendications

1. Utilisation d'un article moulé composite pour un matériau absorbant les chocs, un matériau distribuant la pression, un matériau isolant les vibrations, ou un matériau isolant phonique,
dans laquelle l'article moulé composite comprend un article moulé (A) et un produit durci de type caoutchouc ou gel (B),
dans laquelle le produit durci de type caoutchouc ou gel (B) est obtenu par durcissement d'une composition durcissable par un rayon d'énergie active (C),
la composition durcissable (C) contient un composant de résine (D) qui est durcissable par des rayons d'énergie active,
le composant (D) contient à la fois un polymère vinylique qui possède une double liaison polymérisable carbone - carbone aux deux terminaisons du polymère et un polymère vinylique qui possède une double liaison polymérisable carbone - carbone à une terminaison du polymère, et
l'article moulé composite est obtenu par injection de la composition durcissable (C) dans une cavité dans l'article moulé (A) et puis durcissement de la composition durcissable (C) par exposition aux rayons d'énergie active.

2. Utilisation selon la revendication 1, dans laquelle le produit durci (B) possède une dureté inférieure à 90 en tant que dureté mesurée par duromètre de type E selon la norme JIS K 6253.

3. Utilisation selon la revendication 1 ou 2, dans laquelle le ou les polymères vinyliques qui ont une double liaison polymérisable carbone - carbone à une terminaison moléculaire sont un polymère (méth)acrylique.

4. Utilisation selon l'une quelconque des revendications 1 à 3, dans laquelle le ou les polymères vinyliques qui ont une double liaison polymérisable carbone - carbone à une terminaison moléculaire ont une distribution du poids moléculaire inférieure à 1,8.

5. Utilisation selon l'une quelconque des revendications 1 à 4, dans laquelle l'article moulé (A) possède une dureté supérieure à celle du produit durci (B).

6. Utilisation selon l'une quelconque des revendications 1 à 4, dans laquelle l'article moulé (A) possède une dureté inférieure à celle du produit durci (B).

7. Matériau absorbant les chocs comprenant l'article moulé composite tel que défini selon l'une quelconque des revendications 1 à 6.

8. Matériau distribuant la pression comprenant l'article moulé composite tel que défini selon l'une quelconque des revendications 1 à 6.

9. Matériau isolant les vibrations comprenant l'article moulé composite tel que défini selon l'une quelconque des revendications 1 à 6.

10. Matériau isolant phonique comprenant l'article moulé composite tel que défini selon l'une quelconque des revendications 1 à 6.

11. Méthode de production d'un matériau absorbant les chocs, d'un matériau distribuant la pression, d'un matériau isolant les vibrations, ou d'un matériau isolant phonique,
comprenant l'étape de production d'un article moulé composite tel que défini selon l'une quelconque des revendications 1 à 6,
la méthode de production de l'article moulé composite comprenant l'injection de la composition durcissable (C) dans une cavité située dans l'article moulé (A) et puis le durcissement de la composition durcissable (C) par exposition à des rayons d'énergie active pour donner le produit durci de type caoutchouc ou gel (B).
